# EUROPEAN PATENT APPLICATION

(11) **EP 4 610 764 A1**
(43) Date of publication of application: **03.09.2025**
(21) Application number: 25160597.8
(22) Date of filing: 27.02.2025
(51) Int. Cl.: G05D 1/243, G05D 1/644, G05D 107/00, G05D 109/30, G05D 111/10, B63H 25/00, G01C 21/20

(54) **MARINE VESSEL STEERING CONTROL DEVICE AND METHOD, AND MARINE VESSEL**

(30) Priority: 01.03.2024 JP 2024031010
(71) Applicant: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP); Okamura, Daisuke, Iwata-shi, Shizuoka, 4388501 (JP); Naito, Katsutoshi, Iwata-shi, Shizuoka, 4388501 (JP); Akahane, Kunihiko, Iwata-shi, Shizuoka, 4388501 (JP); Takase, Hiroaki, Iwata-shi, Shizuoka, 4388501 (JP); Yoshida, Kazumichi, Iwata-shi, Shizuoka, 4388501 (JP); Hirota, Tomohiro, Iwata-shi, Shizuoka, 4388501 (JP)
(74) Representative: Grünecker Patent- und Rechtsanwälte PartG mbB

(57) **Abstract**

A marine vessel steering control device including a first imaging unit that is fixed to a hull and captures an image of a subject; a vessel operation controller that performs automated vessel operation of the hull based on a captured image obtained by the first imaging unit; and a determination unit that determines, based on an imaging angular field of the first imaging unit, whether or not sunlight is located within a reference angular field defined as an angular field within the imaging angular field. In a case where the sunlight is located within the reference angular field, the vessel operation controller changes an actual traveling direction of the hull to an angle at which the sunlight is located outside the reference angular field.

## Description

The present invention relates to a marine vessel steering control device and method, and a marine vessel.

In the automotive field, automated driving technologies have been developed. Generally, images captured by cameras are used for automated driving. Since, in the captured images obtained in a state in which sunlight enters an imaging angular field of a camera, there is a possibility that an imaged subject or the like cannot be properly imaged, it is desirable to avoid backlit conditions in which sunlight enters the imaging angular field.

In this respect, in Japanese Laid-open Patent Application (Kokai) No. 2022-155838, when a backlit condition is predicted, backlight avoidance processing such as a change in vehicle location, a detour, or a change in passing timing is executed.

However, since the marine vessel field has unique circumstances different from those on land, such as the absence of roads, taking the circumstances into consideration allows room for studies of approaches to navigation with appropriate avoidance of reflected sunlight.

An object of the present invention is to provide a marine vessel steering control device capable of reducing deterioration in quality of an acquired image due to sunlight and realizing appropriate automated vessel operation.

According to an example embodiment of the present invention, a marine vessel steering control device includes a first imaging unit that is fixed to a hull and captures an image of a subject; a vessel operation controller that performs automated vessel operation of the hull based on a captured image obtained by the first imaging unit; and a determination unit that determines, based on an imaging angular field of the first imaging unit, whether or not sunlight is located within a reference angular field defined as an angular field within the imaging angular field, wherein, in a case where the sunlight is located within the reference angular field, the vessel operation controller changes an actual traveling direction of the hull to an angle at which the sunlight is located outside the reference angular field.

According to this configuration, the determination unit determines, based on the imaging angular field of the imaging unit, whether or not sunlight is located within the reference angular field defined as an angular field within the imaging angular field. In a case where sunlight is located within the reference angular field, the vessel operation controller changes an actual traveling direction of the hull to an angle at which the sunlight becomes observed outside the reference angular field.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a schematic side diagram of a marine vessel to which a marine vessel steering control device is applied.
FIG. 2 is a block diagram of the marine vessel.
FIG. 3 is a conceptual diagram illustrating an imaging angular field and a reference angular field of each camera.
FIG. 4 is a flowchart of automated navigation control processing.
FIG. 5 is a schematic diagram illustrating a relationship between the imaging angular field and an estimated location of sunlight.
FIGS. 6A to 6B are schematic diagrams illustrating a first example of backlight avoidance processing.
FIG. 7 is a schematic diagram illustrating a second example of the backlight avoidance processing.
FIG. 8 is a schematic diagram illustrating a first example of backlight preventive processing.
FIG. 9 is a schematic diagram illustrating a second example of the backlight preventive processing.
FIG. 10 is a diagram for illustrating a first example of path correction processing.
FIG. 11 is a diagram for illustrating a second example of the path correction processing.
FIG. 12 is a diagram for illustrating a third example of the path correction processing.
FIG. 13 is a diagram for illustrating a fourth example of the path correction processing.

### DETAILED DESCRIPTION OF THE EXAMPLE EMBODIMENTS

Hereinafter, example embodiments of the present invention will be described with reference to the drawings.

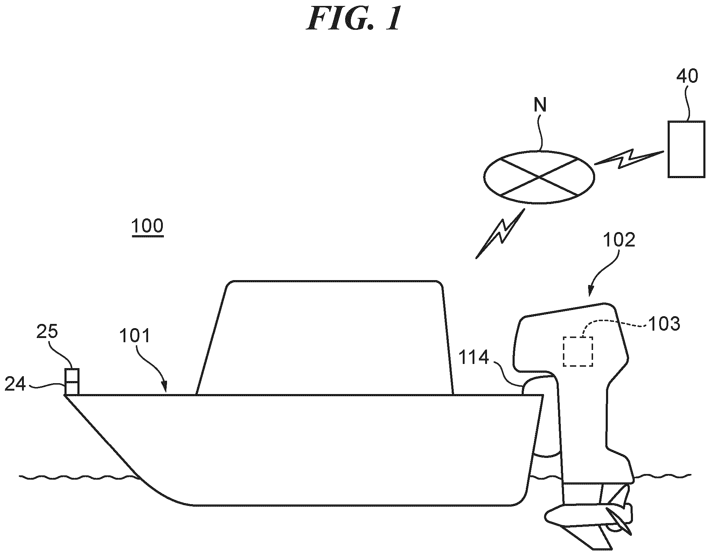

FIG. 1 is a schematic side diagram of a marine vessel to which a marine vessel steering control device according to an embodiment of the present invention is applied. A marine vessel 100 includes a hull 101 and a marine propulsion device 102 mounted on the hull 101. The marine propulsion device 102 is, for example, an outboard motor. Two or more marine propulsion devices 102 may be provided. The marine vessel 100 is communicatively connected to a server 40 via a network N.

The marine propulsion device 102 is attached to the hull 101 via an attachment unit 114. The marine propulsion device 102 includes a drive source (for example, an engine) 103. The drive source 103 may be an electric motor. The marine propulsion device 102 obtains thrust for moving the hull 101 by a propeller rotated by drive force of the drive source 103. The attachment unit 114 includes a swivel bracket, a cramp bracket, a steering shaft, and a tilt shaft (all not illustrated).

The attachment unit 114 further includes a power trim and tilt mechanism (PTT mechanism) (not illustrated). The PTT mechanism causes the marine propulsion device 102 to pivot around the tilt shaft. This enables an inclination angle (a trim angle or a tilt angle) of the marine propulsion device 102 to be changed with respect to the hull 101. The marine propulsion device 102 can pivot around the steering shaft with respect to the swivel bracket. In manual navigation, the marine propulsion device 102 pivots left and right by operating a steering wheel (not illustrated), whereby the marine vessel 100 is steered.

A main camera 24 and a sub camera 25 are installed at a bow. The main camera 24 and the sub camera 25 are an imaging unit and another imaging unit, respectively, which are fixed to the hull 101 and image a subject. Each camera may be attached, for example, to a bow rail (not illustrated) directly or via a support.

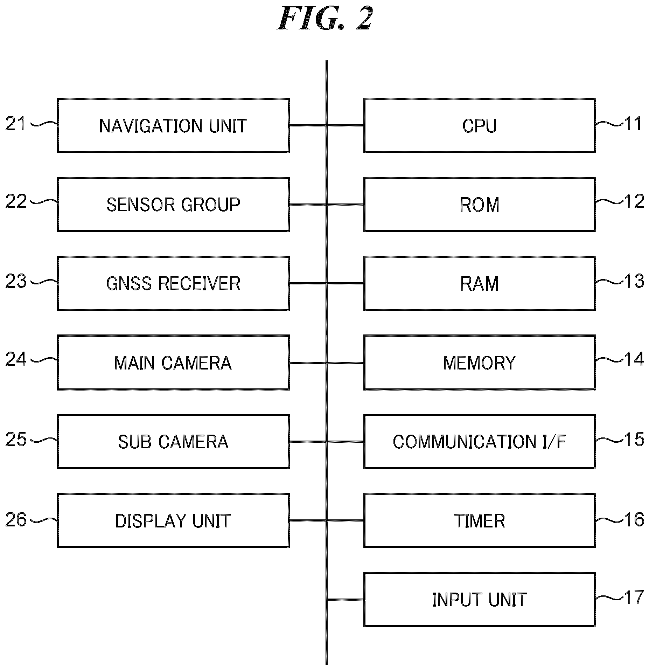

FIG. 2 is a block diagram of the marine vessel.

The marine vessel 100 includes, in addition to the main camera 24 and the sub camera 25 described above, a navigation unit 21, a sensor group 22, a GNSS receiver 23, and a display unit 26. The marine vessel 100 also includes a CPU 11, a ROM 12, a RAM 13, a memory 14, a communication interface (I/F) 15, a timer 16, and an input unit 17.

The CPU 11 controls the overall marine vessel 100. The ROM 12 or the memory 14 stores a control program. The memory 14 also stores nautical chart information acquired from the server 40. The CPU 11 implements various control processes by loading, in the RAM 13, a control program stored in the ROM 12 or the like and executing the control program. The RAM 13 provides a work area when the CPU 11 executes the control program. The timer 16 measures time.

The navigation unit 21 includes, in addition to the drive source 103 (FIG. 1), a steering, a remote controller, a throttle, a shift mechanism, a steering mechanism, and the like (all not illustrated), and an element necessary for navigation. The sensor group 22 may include, in addition to a sensor that detects operation of the input unit 17, an orientation sensor, an acceleration sensor, a speed sensor, an angular velocity sensor, an engine rpm sensor, a shift location sensor, a millimeter wave radar, and the like (all not illustrated). A detection result obtained by the sensor group 22 is sent to the CPU 11.

The GNSS receiver 23 periodically receives a global navigation satellite systems (GNSS) signal from a GNSS satellite. This enables the CPU 11 to acquire a current location of the marine vessel 100.

The input unit 17 receives input of various settings, modes, or the like from a vessel operator of the marine vessel 100. The communication I/F 15 can communicate with the server 40 via the network N, and can also communicate with an ECU (not illustrated) that controls the drive source 103 of the navigation unit 21 via a Controller Area Network (CAN) or the like.

Imaging directions of the main camera 24 and the sub camera 25 are both set to a substantially front side. The display unit 26 displays various items of information. Captured images obtained by the cameras 24 and 25 are sent to the CPU 11 and displayed on the display unit 26 in an aspect according to the set mode. The CPU 11 as a vessel operation controller mainly performs automated steering of the hull 101 based on the obtained captured image. A known method can be employed as a basic method for realizing unmanned automated navigation. Hence, the automated navigation can be realized by using, in addition to the captured image, detection information obtained from the sensor group 22, location information obtained from the GNSS receiver 23, or the like.

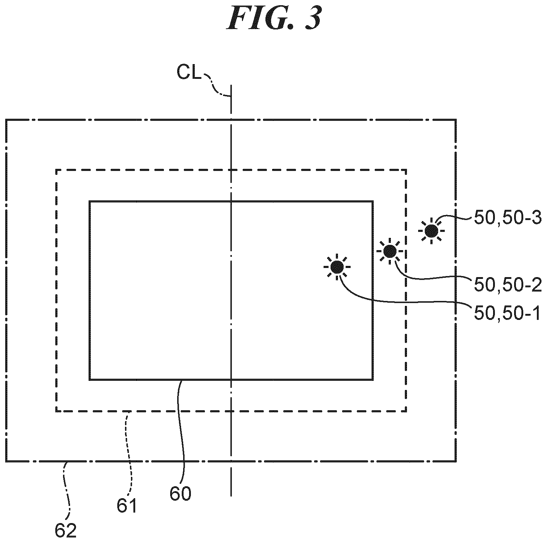

FIG. 3 is a conceptual diagram illustrating an imaging angular field and a reference angular field of each camera.

An imaging angular field 62 of the sub camera 25 is larger than an imaging angular field 61 of the main camera 24. Since imaging directions of the cameras 24 and 25 are common, angular field center-lines CL in a leftward-rightward direction are common, and angular field center-lines in a vertical direction (not illustrated) are also common. Hence, the imaging angular field 61 is inside the imaging angular field 62.

A reference angular field 60 is an angular field used to determine whether or not a so-called backlit condition is observed. The reference angular field 60 is set as an angular field within the imaging angular field 61. In the present embodiment, the reference angular field 60 is smaller than the imaging angular field 61 and inside the imaging angular field 61. The reference angular field 60 may be the same as the imaging angular field 61.

In FIG. 3, sunlight 50 represents very bright light source such as the sun in the reference or imaging angular fields. The sunlight 50-1 is the sunlight 50 near the periphery of the reference angular field 60, the sunlight 50-2 is the sunlight 50 near the periphery of the imaging angular field 61, and the sunlight 50-3 is the sunlight 50 near the periphery of the imaging angular field 62.

For example, the sunlight 50-1 and the sunlight 50-2 are contained in both captured images obtained by both the cameras 24 and 25. However, the sunlight 50-3 is contained in the captured image obtained by the sub camera 25, but is not contained in the captured image obtained by the main camera 24.

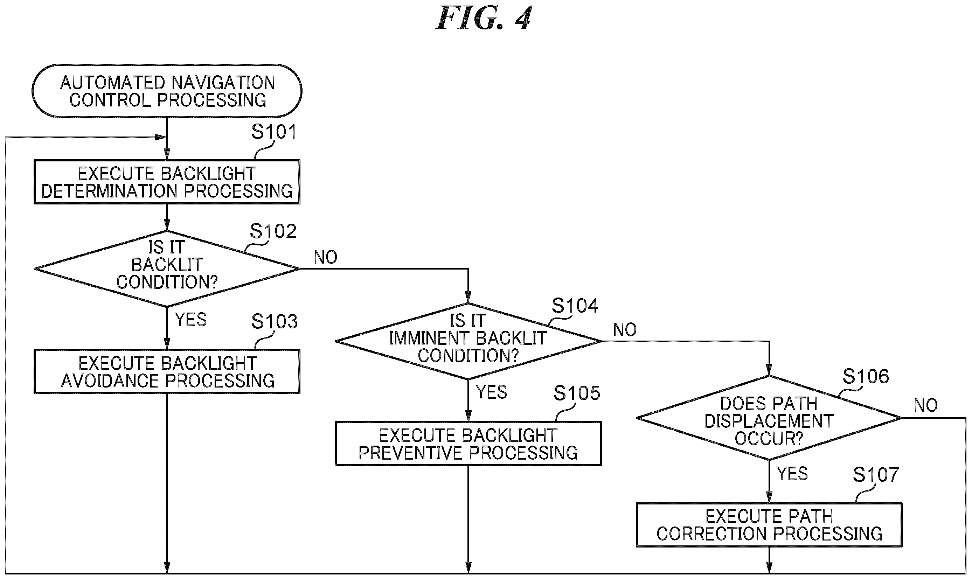

FIG. 4 is a flowchart of automated navigation control processing. This processing is realized by causing the CPU 11 to load, in the RAM 13, a program stored in the ROM 12 or the like and executing the program. This processing is started in response to reception of an automated navigation start instruction, and is ended by an end instruction or unscheduled operation. If an image to be used for automated navigation is acquired in a backlit condition, quality of the image deteriorates, and it is difficult to perform appropriate automated vessel operation. In this respect, backlight determination processing and vessel operation control depending on a determination result are executed.

In step S101, the CPU 11 as a determination unit executes the backlight determination processing. In the backlight determination processing, it is determined whether or not a current imaging condition corresponds to the "backlit condition" or an "imminent backlit condition".

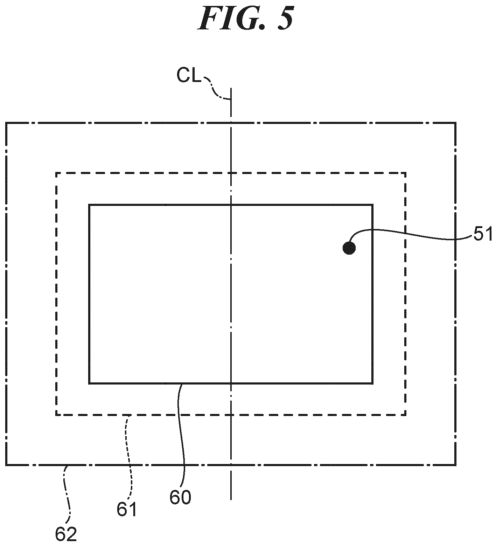

A case where it is estimated that the sunlight 50 is reflected or the sunlight 50 is located within the reference angular field 60 is determined as the backlit condition (described with reference to FIGS. 3 and 5).

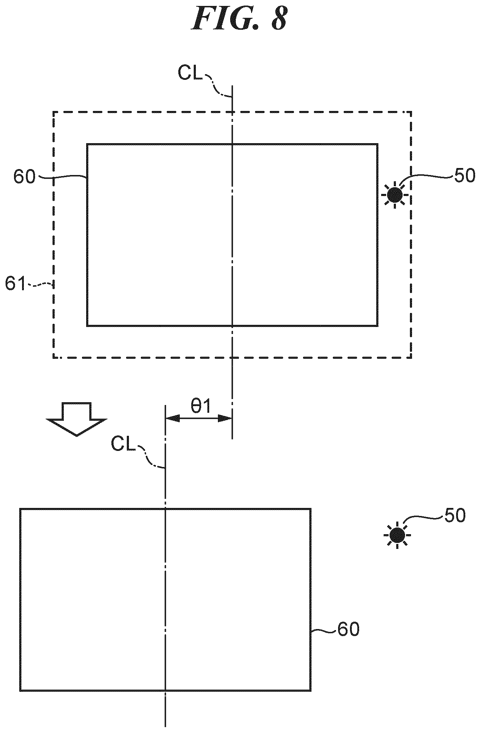

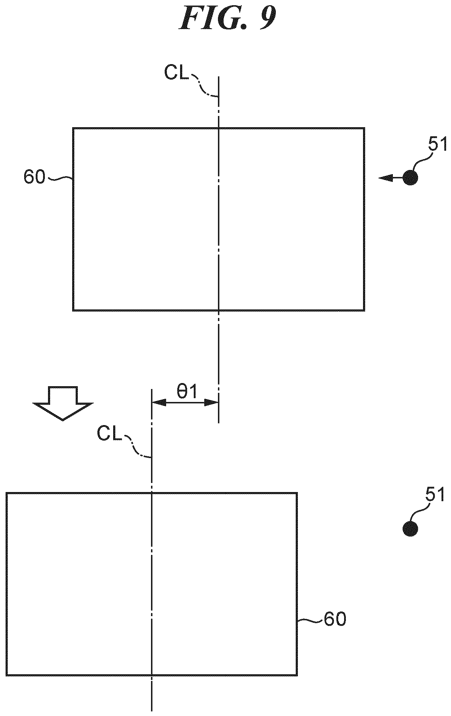

A case where the sunlight 50 enters a region (frame region) within the imaging angular field 61 and outside the reference angular field 60 is determined as the imminent backlit condition (to be described with reference to FIG. 8). A case where the sunlight 50 located outside the reference angular field 60 is predicted to enter the reference angular field 60 therefrom is also determined as the imminent backlit condition (to be described with reference to FIG. 9). The imminent backlit condition may be defined as a critical condition close to the backlit condition.

A technique of determining the backlit condition will be described with reference to FIGS. 3 and 5. FIG. 5 is a schematic diagram illustrating a relationship between the imaging angular field and an estimated location of sunlight. First, the CPU 11 determines, as the backlit condition, a case where the sunlight 50 is located within the reference angular field 60. FIG. 3 illustrates a case where it is determined that the sunlight 50-1 is present within the reference angular field 60. At that time, the backlit condition may be determined using one image obtained by the camera 24 or 25, or both images obtained by the cameras 24 and 25.

Specifically, the CPU 11 determines that the sunlight 50 is located within the reference angular field 60 in a case where the captured image obtained by the main camera 24 has a position or spot having a luminance equal to or larger than a threshold value within the reference angular field 60. Alternatively, the CPU 11 determines that the sunlight 50 is located within the reference angular field 60 in a case where the captured image obtained by the sub camera 25 has a position or spot having a luminance equal to or larger than the threshold value within an angular field corresponding to the reference angular field 60.

Alternatively, the backlit condition may be determined based on both of the estimated location of sunlight and a total light quantity of the image instead of a locally high luminance within the reference angular field 60.

For example, as illustrated in FIG. 5, the CPU 11 estimates a location of sunlight with respect to the reference angular field 60 based on a current location (latitude, longitude) of the hull 101, an orientation of the main camera 24 and/or an orientation of the sub camera 25, and a current time. The estimated current location of the sun is defined as an estimated location 51. In the example of FIG. 5, the estimated location 51 is observed within the reference angular field 60. Then, the CPU 11 determines, as the backlit condition, a case where the estimated location 51 is observed within the reference angular field 60, and the total light quantity of the image within the reference angular field 60 is equal to or larger than a predetermined light quantity. Hence, even if it is estimated that the estimated location 51 is present within the reference angular field 60, this is not determined as the backlit condition when the total light quantity of the image within the reference angular field 60 is smaller than the predetermined light quantity due to rainy or cloudy weather. This is because an image without an exceptionally bright light source can be used for automated navigation without any trouble.

In step S102, the CPU 11 determines whether or not a result of the backlight determination processing in step S101 corresponds to the backlit condition. Then, the CPU 11 proceeds to step S103 in a case where the result of the backlight determination processing corresponds to the backlit condition, and proceeds to step S104 in a case where the result of the backlight determination processing does not correspond to the backlit condition.

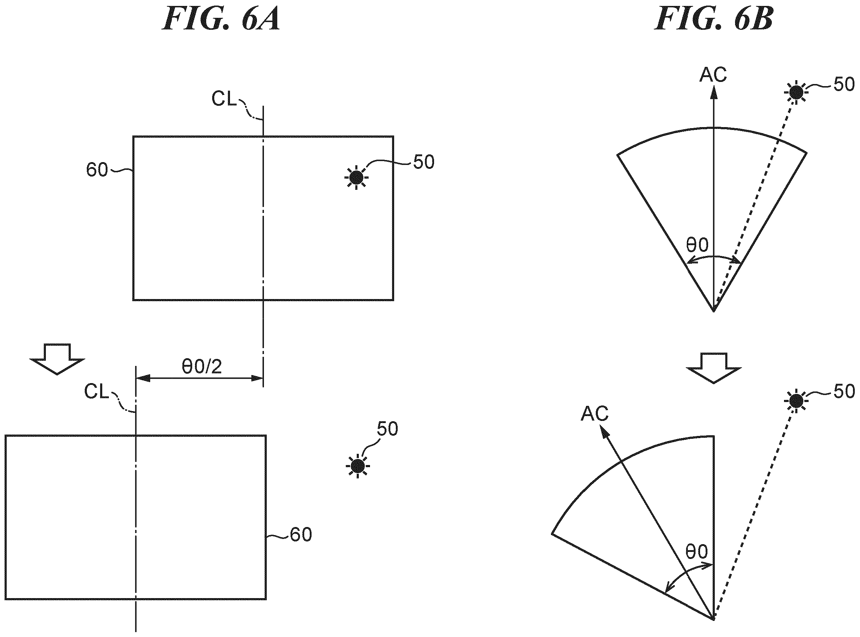

In step S103, since it is determined that the sunlight 50 is located within the reference angular field 60, the CPU 11 executes backlight avoidance processing. In the backlight avoidance processing, the CPU 11 as a vessel operation controller controls the navigation unit 21 to change the actual traveling direction of the hull 101 so that the sunlight 50 becomes observed outside the reference angular field 60. For example, the CPU 11 calculates thrust suitable for changing the actual traveling direction and a direction thereof for each of the marine propulsion devices 102, and controls each of the marine propulsion devices 102 depending on the calculation result. An example of the backlight avoidance processing will be described with reference to FIGS. 6A to 7.

FIGS. 6A and 6B are schematic diagrams illustrating a first example of the backlight avoidance processing. In FIG. 6A, similarly to FIG. 3, the sunlight 50 is illustrated within the reference angular field 60 at the beginning. FIG. 6B is a conceptual diagram illustrating the reference angular field 60 from above. An angle θ0 of the reference angular field 60 in a leftward-rightward direction is 60°, for example. AC represents the actual traveling direction, and coincides with the angular field center-line CL on the captured image.

As illustrated in FIGS. 6A and 6B, in a case where the sunlight 50 is located within the reference angular field 60, the CPU 11 changes the actual traveling direction AC of the hull 101 in one of leftward and rightward directions so that the angular field center-line CL of the reference angular field 60 becomes further away from the sunlight 50. In FIGS. 6A and 6B, since the sunlight 50 is located to the right of the angular field center-line CL, the CPU 11 changes the actual traveling direction AC to the left. When the actual traveling direction AC is changed, the amount of angle to be changed is half the angle (θ0/2) of the reference angular field. For example, if the reference angle is 60°, the amount of angle to be changed is 30°. By changing the actual traveling direction AC to the left by θ0/2, the sunlight 50 becomes observed outside the reference angular field 60.

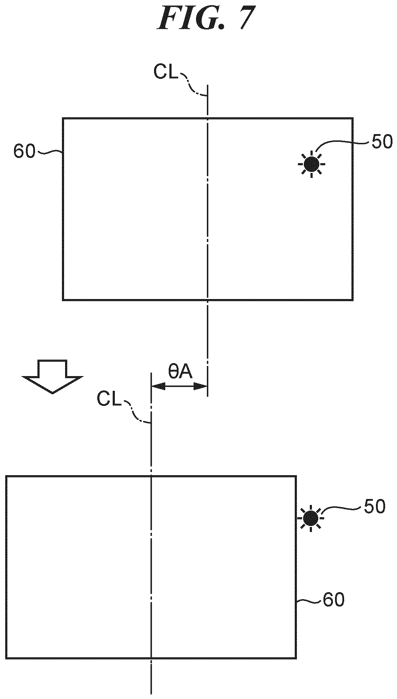

FIG. 7 is a schematic diagram illustrating a second example of the backlight avoidance processing. In the example illustrated in FIG. 7, the sunlight 50 is located within the reference angular field 60. The CPU 11 changes the actual traveling direction AC of the hull 101 by at least a minimum turning angle θA in one of leftward and rightward directions in which a minimum turning angle θA suitable for the sunlight 50 to become observed outside the reference angular field 60 becomes small. The minimum turning angle θA is calculated by the CPU 11. In the example illustrated in FIG. 7, the sunlight 50 is located to the right of the angular field center-line CL. In this case, the CPU 11 changes the actual traveling direction AC to the left by an angle equal to or larger than the minimum turning angle θA. This causes the sunlight 50 to become observed outside the reference angular field 60.

In the first example and the second example, in a case where the sunlight 50 is observed on the angular field center-line CL, the actual traveling direction AC may be changed to a predetermined direction of the leftward and rightward directions. Either process of the first example or the second example may be employed for the backlight avoidance processing. A user may designate a process to be activated in advance. After step S103, the CPU 11 returns to step S101.

In step S104, the CPU 11 determines whether or not the result of the backlight determination processing (step S101) corresponds to the imminent backlit condition. Then, the CPU 11 proceeds to step S105 in a case where the result of the backlight determination processing corresponds to the imminent backlit condition, and proceeds to step S106 in a case where the result of the backlight determination processing does not correspond to the imminent backlit condition.

In step S105, the CPU 11 executes backlight preventive processing. The backlight preventive processing is processing in which the CPU 11 as the vessel operation controller controls the navigation unit 21 to change the actual traveling direction AC of the hull 101 by a first predetermined angle θ1 in one of the leftward and rightward directions in which the angular field center-line CL (the center) of the reference angular field 60 becomes further away from the sunlight 50. Examples of the imminent backlit condition and the backlight preventive processing will be described with reference to FIGS. 8 and 9.

FIG. 8 is a schematic diagram illustrating a first example of the backlight preventive processing. In the example illustrated in FIG. 8, the sunlight 50 is observed in a region (a frame region) within the imaging angular field 61 and outside the reference angular field 60. Since the sunlight 50 is observed outside the reference angular field 60, an imaging condition does not reach the backlit condition, but there is a possibility that the imaging condition will soon reach the backlit condition. In this respect, the CPU 11 changes the actual traveling direction AC by the first predetermined angle θ1 to the left side which is one of the leftward and rightward directions in which the angular field center-line CL becomes further away from the sunlight 50. This makes it possible to avoid the backlit condition in advance.

FIG. 9 is a schematic diagram illustrating a second example of the backlight preventive processing. In the example illustrated in FIG. 9, the CPU 11 acquires the relative estimated location 51 of the sunlight with respect to the reference angular field 60 based on the current location (latitude, longitude) of the hull 101, an orientation of the main camera 24 or an orientation of the sub camera 25, and a current time. The CPU 11 constantly acquires weather information via the network N. The CPU 11 predicts a possibility that the sunlight 50 will enter the reference angular field 60 based on the estimated location 51 and the weather information. Then, in a case where the sunlight 50 is predicted to enter the reference angular field 60, the CPU 11 changes the actual traveling direction AC of the hull 101 by the first predetermined angle θ1 in one of the leftward and rightward directions in which the angular field center-line CL (the center) of the reference angular field 60 becomes further away from the estimated location 51 (the sunlight 50).

In the example illustrated in FIG. 9, it is assumed that the estimated location 51 is observed on the right of the reference angular field 60, and the estimated location 51 is predicted to move relatively to the left. At this time, based on the weather information, in a case where the weather is sunny or the like and there is a possibility that the sun will be reflected in the captured image, it is predicted that there is a possibility that the sunlight 50 will soon enter the reference angular field 60 and cause the backlit condition. In this respect, the CPU 11 changes the actual traveling direction AC by the first predetermined angle θ1 to the left side which is one of the leftward and rightward directions in which the angular field center-line CL becomes further away from the sunlight 50. This makes it possible to avoid the backlit condition in advance.

Based on the weather information, in a case where the weather is rainy or the like, the backlit condition is not caused even if the estimated location 51 is located within the reference angular field 60. Hence, in step S104 described above, it is not determined as the imminent backlit condition.

The first predetermined angle θ1 is, for example, 10°. In the first example and the second example, the first predetermined angles θ1 may have the same value or different values. After step S105, the CPU 11 returns to step S101.

In step S106, the CPU 11 calculates displacement θB between a target traveling direction TC and an actual traveling direction AC of the hull 101, and determines whether or not there is path displacement. In a case where the displacement θB is larger than a predetermined displacement amount, it is determined that the path displacement is produced between the target traveling direction TC and the actual traveling direction AC. The predetermined displacement amount is a value equal to or smaller than a second predetermined angle θ2 and equal to or smaller than half the angle (θ0/2) of the reference angular field. A magnitude relationship between the second predetermined angle θ2 and θ0/2 is not limited. The value of the second predetermined angle θ2 is not limited, and is, for example, 12°. In the present embodiment, the predetermined displacement amount is the same as the second predetermined angle θ2.

As a result of the determination in step S106, the CPU 11 proceeds to step S107 in a case where there is path displacement, and returns to step S101 in a case where there is no path displacement. Steps S106 and S107 are executed generally in a case where the sunlight 50 is not located within the reference angular field 60.

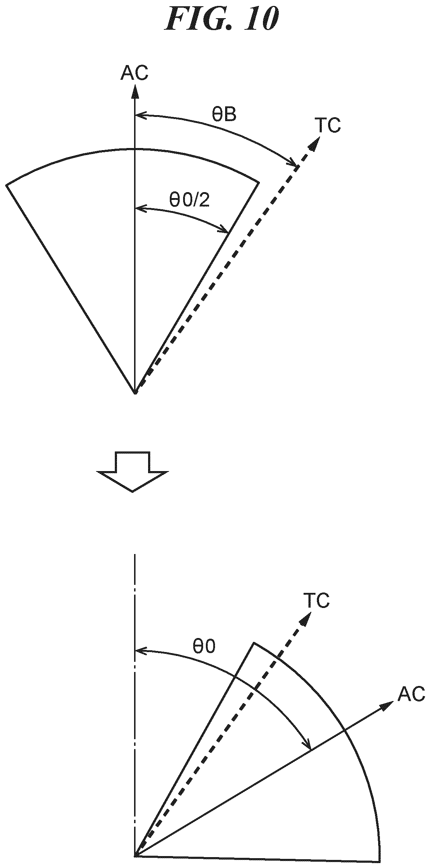

In step S107, the CPU 11 executes path correction processing, and then returns to step S101. The path correction processing is processing in which the CPU 11 as the vessel operation controller controls the navigation unit 21 to reduce or eliminate the path displacement to zero. With reference to FIGS. 10 to 13, four techniques of the path correction processing (first to fourth examples) will be described. One of these four techniques may be applied, or two or more techniques may be used in a combination as long as the techniques are not incompatible.

FIGS. 10, 11, 12, and 13 are diagrams for illustrating a first example, a second example, a third example, and a fourth example of the path correction processing, respectively. As a result of the path correction processing, the sunlight 50 may be located within the reference angular field 60. However, by returning to step S101, the backlight determination processing is executed again, and then the backlight avoidance processing or the like is executed as necessary.

In the first example illustrated in FIG. 10, the displacement θB larger than half the angle of the reference angular field 60 in the leftward-rightward direction is produced ("θ0/2" < θB). In this case, the CPU 11 changes the actual traveling direction AC by the angle (θ0) of the reference angular field in one of the leftward and rightward directions which includes the target traveling direction TC. In the example illustrated in FIG. 10, the CPU 11 changes the actual traveling direction AC to the right side by the angle (θ0) of the reference angular field. By controlling in this manner, the displacement θB becomes small. This can prevent a state of being displaced in one direction from being maintained for a long time as long as the sunlight 50 is not located within reference angular field 60.

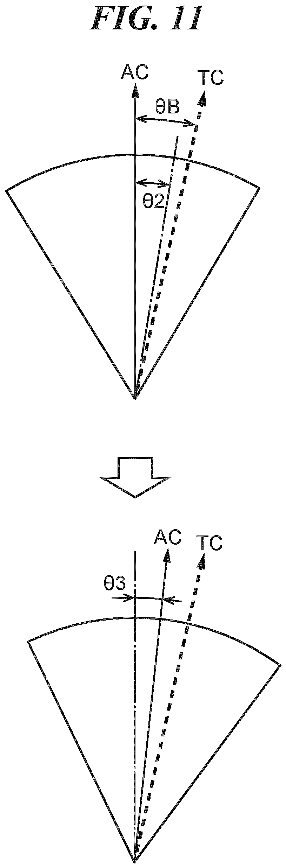

In the second example illustrated in FIG. 11, the displacement θB larger than the second predetermined angle θ2 is produced in the leftward-rightward direction (θ2 < θB). In this case, the CPU 11 changes the actual traveling direction AC by a third predetermined angle θ3 in a direction approaching the target traveling direction TC. The third predetermined angle θ3 is a value that is not larger than the second predetermined angle θ2, and is, for example, 10°. As a result, the displacement θB is decreased. This enables the actual traveling direction AC to be gradually returned to the target traveling direction TC as long as the sunlight 50 is not located within the reference angular field 60.

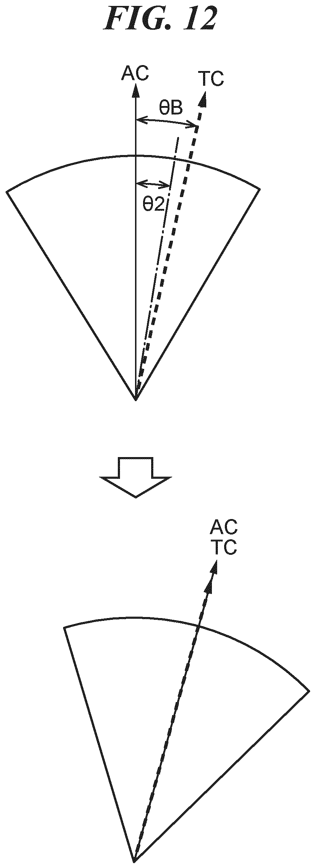

Also in the third example illustrated in FIG. 12, the displacement θB larger than the second predetermined angle θ2 is produced in the leftward-rightward direction (θ2 < θB). In this case, when the total light quantity of the captured image obtained by the sub camera 25 becomes smaller than the predetermined light quantity, the CPU 11 returns the actual traveling direction AC to the target traveling direction TC after waiting for elapsing of a predetermined period of time. It is assumed that the total light quantity becomes smaller than the predetermined light quantity due to the sunset or the rainy or cloudy weather. In this case, even in a case where the estimated location 51 is found within the reference angular field 60, it is predicted that the backlit condition is not caused. Since the necessity of the backlight avoidance is reduced, the displacement amount θB is set to zero by returning the actual traveling direction AC to the target traveling direction TC at once. A reason for waiting for the elapsing of the predetermined period of time is to prevent divergence of control by considering a case where the total light quantity temporarily becomes smaller than the predetermined light quantity. It is not essential to wait for the elapsing of the predetermined period of time.

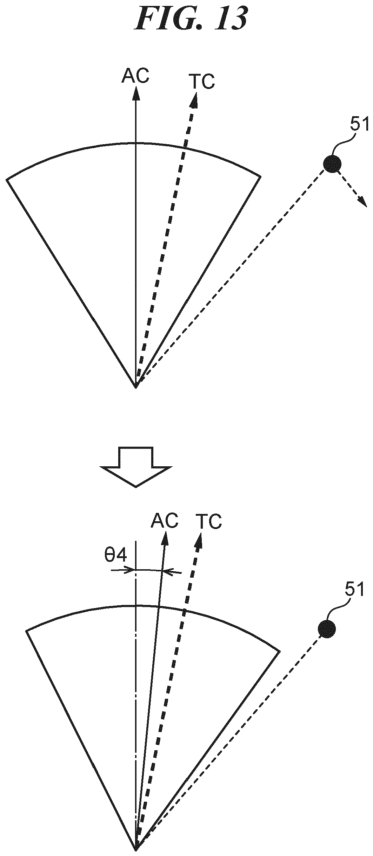

In the fourth example illustrated in FIG. 13, the CPU 11 acquires the relative estimated location 51 of the sunlight with respect to the reference angular field 60 based on the current location (latitude, longitude) of the hull 101, the orientation of the main camera 24 or the orientation of the sub camera 25, and the current time. In the example illustrated in FIG. 13, the target traveling direction TC is closer to the estimated location 51 than the angular field center-line CL of the reference angular field 60 is. Moreover, it is assumed that the estimated location 51 (the sunlight 50) is predicted to get gradually away from the reference angular field 60 outside the reference angular field 60 from the current orientation, location, time, or the like.

In such a case, whenever the estimated location 51 gets away by a fourth predetermined angle θ4 (for example, 10°), the CPU 11 changes the actual traveling direction AC by the fourth predetermined angle θ4 in one of the leftward and rightward directions which approaches the estimated location 51 (the right direction in the example illustrated in FIG. 13). This enables the actual traveling direction AC to gradually approach the target traveling direction TC in a situation in which the sunlight 50 gets away, in a case where a certain direction of the leftward and rightward directions in which the sunlight 50 is observed is the same as a displacement direction of the target traveling direction TC.

According to the present embodiment, in a case where the sunlight 50 is located within the reference angular field 60, the CPU 11 changes the actual traveling direction to an angle at which the sunlight 50 gets away from the reference angular field 60. This curbs acquisition of an image to be used for automated navigation in the backlit condition or the like. Accordingly, deterioration in quality of an acquired image due to the sunlight can be reduced, and the appropriate automated vessel operation can be realized.

The angles θ0, θ1, θ2, θ3, θ4, and θA are stored in the memory 14 in advance, but may be changed afterwards. The values of the angles θ0, θ1, θ2, θ3, θ4, and θA are not limited to the values shown as examples.

It is not essential to execute the backlight preventive processing (S105) or the path correction processing (S107). Even if a mode of executing only the backlight preventive processing (S105) or the path correction processing (S107) without executing the backlight avoidance processing (S103) is executed, this contributes to reduction of deterioration in quality of the acquired image.

Although the present invention has been described in detail based on the example embodiments thereof, the present invention is not limited to these specific embodiments, and various embodiments in a range without departing from the gist of this invention are also included in the present invention.

The present invention is also applicable to a jet boat, in addition to various marine vessels propelled by an outboard motor, an inboard motor, or an inboard/outboard motor.

The present invention can also be realized by processing in which a program for realizing one or more functions of the above-described embodiments is supplied to a system or a device via a network or a non-transitory storage medium, and one or more processors of a computer of the system or the device reads and executes the program. The above program and a storage medium storing the above program constitute the present invention. The present invention can also be realized by a circuit (for example, an ASIC) that realizes one or more functions.

While example embodiments of the present invention have been described above, it is to be understood that variations and modifications will be apparent to those skilled in the art without departing from the scope of the present invention. The scope of the present invention, therefore, is to be determined solely by the following claims.

## Claims

1. A marine vessel steering control device comprising:
a first imaging unit (24) that is fixed to a hull (101) and captures an image of a subject;
a vessel operation controller that performs automated vessel operation of the hull (101) based on a captured image obtained by the first imaging unit (24); and
a determination unit (11) that determines, based on an imaging angular field (61) of the first imaging unit (24), whether or not sunlight is located within a reference angular field (60) defined as an angular field within the imaging angular field (61),
wherein, in a case where the sunlight is located within the reference angular field (60), the vessel operation controller changes an actual traveling direction of the hull (101) to an angle at which the sunlight is located outside the reference angular field (60).

2. The marine vessel steering control device according to claim 1, wherein
the determination unit (11) determines that the sunlight is located within the reference angular field (60) in a case where a position having a luminance equal to or higher than a threshold value is located within the reference angular field (60).

3. The marine vessel steering control device according to claim 1 or 2, further comprising:
a second imaging unit (25) having a wide imaging angular field (62) including the imaging angular field (61) of the first imaging unit (24); wherein
the determination unit (11) determines that the sunlight is located within the reference angular field (60) in a case where a captured image obtained by the second imaging unit (25) has a position having a luminance equal to or higher than a threshold value within an angular field corresponding to the reference angular field (60).

4. The marine vessel steering control device according to any of claims 1 to 3, wherein
the determination unit (11) estimates a location of the sunlight based on a location of the hull (101) and a current time, and determines whether or not the sunlight is located within the reference angular field (60) based on the estimated location of the sunlight and a total light quantity of an image within the reference angular field (60).

5. The marine vessel steering control device according to claim 4, wherein
the determination unit (11) determines that the sunlight is located within the reference angular field (60) in a case where the estimated location of the sunlight is within the reference angular field (60) and the total light quantity of the image within the reference angular field (60) is equal to or larger than a predetermined light quantity.

6. The marine vessel steering control device according to any of claims 1 to 5, wherein
in a case where the sunlight is located within the reference angular field (60), the vessel operation controller changes the actual traveling direction of the hull (101) by half an angle of the reference angular field (60) in one of leftward and rightward directions in which a center of the reference angular field (60) becomes further away from the sunlight.

7. The marine vessel steering control device according to any of claims 1 to 5, wherein
in a case where the sunlight is located within the reference angular field (60), the vessel operation controller changes the actual traveling direction of the hull (101) by at least a minimum turning angle in one of leftward and rightward directions in which the minimum turning angle suitable for the sunlight to be located outside the reference angular field (60) becomes smaller.

8. The marine vessel steering control device according to claim 1, wherein
the reference angular field (60) is smaller than the imaging angular field (61) of the first imaging unit (24), and
in a case where the sunlight enters a region within the imaging angular field (61) and outside the reference angular field (60), the vessel operation controller changes the actual traveling direction of the hull (101) by a first predetermined angle in one of leftward and rightward directions in which a center of the reference angular field (60) becomes further away from the sunlight.

9. The marine vessel steering control device according to claim 1, wherein
the determination unit (11) estimates a location of the sunlight based on a location of the hull (101) and a current time, and
the vessel operation controller predicts whether or not the sunlight will enter the reference angular field (60) based on the estimated location of the sunlight and weather information, in a case where the vessel operation controller predicts that the sunlight will enter the reference angular field (60), the vessel operation controller changes the actual traveling direction of the hull (101) by a first predetermined angle in one of leftward and rightward directions in which a center of the reference angular field (60) becomes further away from the sunlight.

10. The marine vessel steering control device according to any of claims 1 to 5, wherein
in a case where the sunlight is not located within the reference angular field (60), and a displacement larger than half an angle of the reference angular field (60) is produced between a target traveling direction and the actual traveling direction of the hull (101), the vessel operation controller changes the actual traveling direction of the hull (101) by the angle of the reference angular field (60) in one of leftward and rightward directions which includes the target traveling direction.

11. The marine vessel steering control device according to any of claims 1 to 5, wherein
in a case where the sunlight is not located within the reference angular field (60), and a displacement larger than a second predetermined angle is produced between a target traveling direction and the actual traveling direction of the hull (101), the vessel operation controller changes the actual traveling direction of the hull (101) by a third predetermined angle that is not larger than the second predetermined angle in a direction approaching the target traveling direction.

12. The marine vessel steering control device according to any of claims 1 to 5, further comprising:
a second imaging unit (25) having a wide imaging angular field (62) including the imaging angular field (61) of the first imaging unit (24); wherein
in a case where the sunlight is not located within the reference angular field (60), and a displacement larger than a second predetermined angle is produced between a target traveling direction and the actual traveling direction of the hull, when a total light quantity of a captured image obtained by the second imaging unit (25) becomes smaller than a predetermined light quantity, the vessel operation controller returns the actual traveling direction of the hull (101) to the target traveling direction after waiting for elapsing of a predetermined period of time.

13. The marine vessel steering control device according to any of claims 1 to 5, wherein
the determination unit (11) estimates a location of the sunlight based on a location of the hull (101) and a current time, and
in a case where the sunlight is predicted to gradually move away from the reference angular field (60) outside the reference angular field (60), and a target traveling direction of the hull (101) is closer to the sunlight than a center of the reference angular field (60), the vessel operation controller changes the actual traveling direction of the hull (101) by a fourth predetermined angle in one of leftward and rightward directions in which the actual traveling direction approaches the sunlight whenever the location of the sunlight becomes away from the center of the reference angular field (60) by the fourth predetermined angle.

14. A marine vessel steering control method for a marine vessel having a hull (101) to which an imaging unit (24) that captures an image of a subject is fixed, the method comprising:
performing automated vessel operation of the hull (101) based on a captured image obtained by the imaging unit (24);
determining, based on an imaging angular field (61) of the imaging unit (24), whether or not sunlight is located within a reference angular field (60) defined as an angular field within the imaging angular field (61); and
changing an actual traveling direction of the hull (101) to an angle at which the sunlight is located outside the reference angular field (60) in a case where the sunlight is located within the reference angular field (60).

15. A marine vessel comprising the marine vessel steering control device according to any of claims 1 to 13.
